(19) Europäisches Patentamt
European Patent Office
Office européen des brevets

(11) **EP 4 249 452 A1**

(12) **EUROPÄISCHE PATENTANMELDUNG**

(43) Veröffentlichungstag:
**27.09.2023   Patentblatt 2023/39**

(21) Anmeldenummer: **23160813.4**

(22) Anmeldetag: **08.03.2023**

(51) Internationale Patentklassifikation (IPC):
**C04B 35/626** (2006.01)   **C04B 35/628** (2006.01)
**C04B 35/80** (2006.01)

(52) Gemeinsame Patentklassifikation (CPC):
**C04B 35/62897; C04B 35/6268; C04B 35/62847;**
**C04B 35/62855; C04B 35/62886; C04B 35/80;**
C04B 2235/5224; C04B 2235/5228;
C04B 2235/5244; C04B 2235/5264

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(30) Priorität: **21.03.2022   DE 102022202762**

(71) Anmelder: **Fraunhofer-Gesellschaft zur**
**Förderung**
**der angewandten Forschung e.V.**
**80686 München (DE)**

(72) Erfinder:
• **RÜDINGER, Arne**
  **95448 Bayreuth (DE)**
• **RAETHER, Friedrich, Prof. Dr.**
  **95448 Bayreuth (DE)**
• **VIERHAUS, Peter**
  **95448 Bayreuth (DE)**

(74) Vertreter: **Pfenning, Meinig & Partner mbB**
**Patent- und Rechtsanwälte**
**Theresienhöhe 11a**
**80339 München (DE)**

(54) **KERAMISCHE VERSTÄRKUNGSFASER, VERFAHREN ZU DEREN HERSTELLUNG UND VERBUNDWERKSTOFF**

(57)   Es wird eine keramische Verstärkungsfaser, ein Verfahren zu deren Herstellung und ein Verbundwerkstoff bereitgestellt. Die keramische Verstärkungsfaser weist einen Faserkern und einen Fasermantel auf, wobei drei Möglichkeiten bestehen: 1. Der Faserkern enthält ein amorphes Material oder besteht daraus und der Fasermantel enthält Körner aus einem keramischen Material oder besteht daraus. 2. Der Faserkern enthält Körner aus einem keramischen Material oder besteht daraus und der Fasermantel enthält ein amorphes Material oder besteht daraus. 3. Der Faserkern und der Fasermantel enthalten Körner aus einem keramischen Material oder bestehen daraus, wobei ein maximaler Durchmesser der Körner des Fasermantels kleiner ist als ein maximaler Durchmesser der Körner des Faserkerns. Die keramische Verstärkungsfaser ist schnell und einfach herstellbar, chemisch stabil und weist auch unter Einwirkung von sehr hohen Temperaturen über sehr lange Zeiträume eine hohe mechanische Festigkeit und eine hohe Kriechbeständigkeit auf.

EP 4 249 452 A1

**Beschreibung**

Es wird eine keramische Verstärkungsfaser, ein Verfahren zu deren Herstellung und ein Verbundwerkstoff bereitgestellt. Die keramische Verstärkungsfaser weist einen Faserkern und einen Fasermantel auf, wobei drei Möglichkeiten bestehen: 1. Der Faserkern enthält ein amorphes Material oder besteht daraus und der Fasermantel enthält Körner aus einem keramischen Material oder besteht daraus. 2. Der Faserkern enthält Körner aus einem keramischen Material oder besteht daraus und der Fasermantel enthält ein amorphes Material oder besteht daraus. 3. Der Faserkern und der Fasermantel enthalten Körner aus einem keramischen Material oder bestehen daraus, wobei ein maximaler Durchmesser der Körner des Fasermantels kleiner ist als ein maximaler Durchmesser der Körner des Faserkerns. Die keramische Verstärkungsfaser ist schnell und einfach herstellbar, chemisch stabil und weist auch unter Einwirkung von sehr hohen Temperaturen über sehr lange Zeiträume eine hohe mechanische Festigkeit und eine hohe Kriechbeständigkeit auf.

Keramische Verstärkungsfasern werden meist bei hohen Temperaturen größer 1000 °C eingesetzt. Sie müssen deshalb neben einer sehr guten Zugfestigkeit auch eine gute Kriechbeständigkeit aufweisen. Für die zur Erfüllung dieser Anforderungen benötigten Gefügeeigenschaften liegt ein Zielkonflikt vor. Hochfeste Verstärkungsfasern benötigen ein extrem homogenes Gefüge und glatte Oberflächen. Mit kristallinen Keramiken lässt sich dies nur erreichen, wenn die Korngrößen unter ca. 0,5 $\mu$m (typisch 0,1 bis 0,3 $\mu$m) liegen. Andererseits nimmt die Kriechbeständigkeit mit der Korngröße deutlich zu, wodurch hinsichtlich der Kriechbeständigkeit eine Korngröße > 1 $\mu$m wünschenswert wäre. Hochfeste und gleichzeitig kriechfeste Verstärkungsfasern aus einer kristallinen Keramik können deshalb bisher nicht hergestellt werden.

Für den Einsatz von keramischen Verstärkungsfasern in Keramiken, d.h. bei keramischen Faserverbundwerkstoffen (engl.: "CMC"), müssen die Verstärkungsfasern einen Durchmesser um ca. 10 $\mu$m aufweisen. Dagegen sollte der Durchmesser von keramischen Verstärkungsfasern bei ihrem Einsatz in Metallen, d.h. bei Metallmatrix-Verbundwerkstoffen (engl. "MMC"), ca. 100 $\mu$m betragen. Wichtige Randbedingungen, die bei der Lösung dieses Problems zu beachten sind, sind eine ausreichende chemische Beständigkeit der Verstärkungsfasern - sowohl bei der weiteren Prozessierung zu faserverstärkten CMC bzw. MMC als auch im Hochtemperatureinsatz. Außerdem sollen die Herstellkosten niedrig gehalten werden, was z.B. den extensiven Einsatz von CVD- oder PVD-Verfahren ausschließt.

Das Gefüge keramischer Verstärkungsfasern wird durch einen thermischen Prozess (Pyrolyse und Sinterung) eingestellt. Vor der Pyrolyse liegen die Fasern als präkeramische Polymere, Gele oder getrocknete Suspensionen aus nanokristallinen Keramikpartikeln vor. Sie werden in diesem Zustand als Grünfasern bezeichnet. Die Grünfasern können mit einer Avivage beschichtet werden, um Schädigungen während der weiteren Verarbeitung zu vermeiden. Die Avivage wird über Aerosole oder Beschichtungslösungen aufgebracht, die die Grünfasern während der Herstellung durchlaufen. Die Grünfasern müssen häufig getrocknet und/oder gehärtet werden, bevor die thermische Prozessierung erfolgt. Bei der Pyrolyse werden die organischen Bestandteile der Grünfasern zersetzt und in der Regel als Gase entfernt. Dies gilt auch für eine eventuell vorhandene Avivage. Im Anschluss findet bei höheren Temperaturen eine Sinterung statt. Bei der Sinterung werden Poren in den Fasern eliminiert und das Gefüge der Fasern wird dicht. Gleichzeitig bilden sich in der Regel größere kristalline Körner aus (siehe z.B. Schawaller, D. et al., Macromolecular Materials and Engineering, 297:502-522).

Die Zugfestigkeit $\sigma_t$ der gesinterten Fasern wird durch Gefügefehler bestimmt:

$$(1) \qquad \sigma_t = Y \frac{K_{1C}}{\sqrt{\pi a}}$$

Dabei ist Y ein Geometriefaktor nahe 1, $K_{1C}$ der kritische Spannungsintensitätsfaktor und a die Fehlergröße. $K_{1C}$ liegt für keramische Verstärkungsfasern zwischen 2 MPa√m und 4 MPa√m, die Zugfestigkeit $\sigma_t$ beträgt ca. 2 GPa bis 4 GPa. Daraus ergeben sich Fehlergrößen von ca. 0,1 $\mu$m bis 0,4 $\mu$m. Die zulässigen Fehlergrößen hängen nicht nur von der Fehlerform, sondern auch von der Fehlerposition ab. Am stärksten tragen Oberflächenfehler zur Festigkeitsabnahme der Fasern bei. Die Fehlergröße korreliert mit der Korngröße, sodass für Verstärkungsfasern Korngrößen (bzw. Kristallitgrößen) kleiner 0,4 $\mu$m angestrebt werden.

Es ist bekannt, dass das Kornwachstum beim Sintern durch spezielle Additive (Kornwachstumsinhibitoren), die sich an den Korngrenzen anreichern und deren Mobilität verringern, gehemmt werden kann (siehe z.B. Liu, B. & Zhu, L., Ceramics International, 43:10743-10749). Dadurch werden feinkörnige und hochfeste Verstärkungsfasern erreicht. Ferner ist bekannt, dass über eine Dotierung mit sehr kleinen kristallinen Keimbildnern (engl. "seeds") ein homogenes und feinkörniges Kornwachstum erreicht werden kann (siehe z.B. Masato, K. & Messing, G.L., Journal of the American Ceramic Society, 68(9):500-505). Umgekehrt muss bei einigen Verstärkungsfasern ein Sinteradditiv eingesetzt werden, um eine vollständige Verdichtung zu erhalten. Ein Beispiel sind die Sinteradditive Al, C oder B, für die Herstellung dichter kristalliner Verstärkungsfasern aus SiC (siehe z.B. Raju, K. & Yoon, D.H., Ceramics International, 42(16): 17947-17962). Kornwachstumsinhibitoren und Sinteradditive werden nur in sehr geringen Konzentrationen benötigt (< 2 %).

Fasern mit geringen Korngrößen besitzen jedoch keine ausreichende Kriechbeständigkeit bei hohen Temperaturen (siehe z.B. Ichikawa, H., Annu. Rev. Mater. Res., 46:335-356). Es ist bekannt, dass das Kriechen in Keramiken - bei den hier relevanten moderaten Belastungen - durch Diffusionsprozesse entlang der Korngrenzen erfolgt:

$$(2) \qquad \dot{\varepsilon} = C\, D\, \sigma\, k^{-n}$$

mit $\dot{\varepsilon}$ = Kriechrate, C = Konstante, D = Diffusionskoeffizient, $\sigma$ = Spannung, k = Kristallitdurchmesser und n = Exponent. Bei Diffusion entlang der Korngrenzen (Coble-Mechanismus) beträgt der Exponent 3 und bei Diffusion durch das Kristallgitter (Nabarro-Herring-Mechanismus) beträgt der Exponent 2.

Grundsätzlich kann das Problem mangelnder Kriechbeständigkeit durch die Erzeugung von einkristallinen Fasern gelöst werden. Allerdings haben sich die Korngrenzen zwischen den einkristallinen Bereichen als Schwachstellen erwiesen, weil sie zu Einkerbungen an den Faseroberflächen führen und die Fasern bei Zugbelastung durch die auftretenden Kerbspannungen versagen. Unter dem Handelsnamen "Saphikon" wurden von der Compagnie de Saint-Gobain einkristalline Fasern hergestellt, die eine hohe Oberflächenqualität und Festigkeit aufweisen. Allerdings können diese nur mit einem Durchmesser von ca. 100 $\mu$m angeboten werden, was für den Einsatz in faserverstärkten Keramiken viel zu hoch ist. Der große Faserdurchmesser verhindert außerdem die gewünschte textile Verarbeitbarkeit der Fasern.

Ein anderer grundlegender, im Stand der Technik bekannter, Lösungsansatz ist die Erzeugung von Gefügen, die auch bei hohen Temperaturen amorph bleiben. Dadurch, dass sich keine Korngrenzen ausbilden, bleibt die Kriechbeständigkeit auch bei hohen Temperaturen sehr hoch und es treten keine Kerbspannungen auf. Die grundlegende Machbarkeit dieses Ansatzes wurde bereits am Beispiel von Verstärkungsfasern im System Si-B-N-C aufgezeigt (siehe z.B. Kumagai, M. & Messing, G.L., Journal of theamerican CeramicSociety, 68(9):500-505). Allerdings ist die Synthese der für diese Fasern benötigten präkeramischen Polymere sehr komplex und die Fasern sind chemisch weniger stabil als beispielsweise SiC-Fasern, so dass eine Kommerzialisierung bisher nicht möglich war.

Weiterhin besteht die Möglichkeit, Verstärkungsfasern aus zwei Komponenten herzustellen. Beispielsweise kann eine Kohlenstofffaser, die eine hohe Kriechfestigkeit besitzt, über ein Gasphasenverfahren mit SiC beschichtet werden (siehe z.B. SCS-Ultra™ Silicon Carbide Fiber, Specialty Materials, Lowell, MA, USA), da SiC die benötigte chemische Beständigkeit aufweist. Allerdings sind Gasphasenbeschichtungsprozesse wie CVD- oder PVD sehr langsam und entsprechend teuer, wenn damit dicke Oberflächenschichten von einigen Mikrometern hergestellt werden. Dünne Beschichtungen mit einer Dicke von ca. 100 nm können zwar kostengünstig über nasschemische Verfahren erzeugt werden, weisen aber aufgrund der geringen Dicke nicht die erforderliche Schutzwirkung auf.

Ausgehend hiervon war es die Aufgabe der vorliegenden Erfindung, eine keramische Verstärkungsfaser bereitzustellen, welche die im Stand der Technik bekannten Nachteile nicht aufweist. Insbesondere sollte die bereitgestellte keramische Verstärkungsfaser auf schnelle und einfache Art und Weise herstellbar sein, chemisch stabil sein und nicht nur eine hohe mechanische Festigkeit, sondern auch eine hohe Kriechbeständigkeit aufweisen. Ferner sollte ein Verfahren zur Herstellung einer solchen keramischen Verstärkungsfaser vorgestellt werden und ein Verbundwerkstoff mit einer solchen keramischen Verstärkungsfaser bereitgestellt werden.

Die Aufgabe wird gelöst durch die keramische Verstärkungsfaser mit den Merkmalen von Anspruch 1, das Verfahren mit den Merkmalen von Anspruch 8 und den Verbundwerkstoff mit den Merkmalen von Anspruch 16. Die abhängigen Ansprüche zeigen vorteilhafte Weiterbildungen auf.

Erfindungsgemäß wird eine keramische Verstärkungsfaser bereitgestellt, aufweisend

a) einen Faserkern, der sich entlang einer Längsachse der Verstärkungsfaser erstreckt und, in einer Richtung senkrecht zur Längsachse der Verstärkungsfaser, einen Durchmesser von mindestens 2 $\mu$m aufweist;
b) einen Fasermantel, der sich entlang der Längsachse der Verstärkungsfaser auf dem Faserkern erstreckt und, in einer Richtung senkrecht zur Längsachse der Verstärkungsfaser, eine Dicke von mindestens 1 $\mu$m aufweist; und
c) Körner aus einem keramischen Material;

dadurch gekennzeichnet, dass

i) der Faserkern ein amorphes Material enthält oder daraus besteht und der Fasermantel die Körner aus einem keramischen Material enthält oder daraus besteht; oder
ii) der Faserkern die Körner aus einem keramischen Material enthält oder daraus besteht und der Fasermantel ein amorphes Material enthält oder daraus besteht; oder
iii) der Faserkern und der Fasermantel die Körner aus einem keramischen Material enthalten oder daraus bestehen, wobei ein maximaler Durchmesser der Körner des Fasermantels kleiner ist als ein maximaler Durchmesser der Körner des Faserkerns, wobei der maximale Durchmesser jeweils einem über Elektronenmikroskopie bestimmten Durchmesser entspricht.

Unter einem keramischen Material wird ein Material verstanden, das aus Keramik besteht. Unter Keramik wird entsprechend der angelsächsischen Definition ein Material verstanden, das anorganisch, nichtmetallisch und entweder amorph oder kristallin bzw. teilweise amorph und teilweise kristallin ist. Insbesondere wird Glas nicht als Keramik angesehen.

Die erfindungsgemäße keramische Verstärkungsfaser ist auf schnelle und einfache Art und Weise herstellbar, ist chemisch stabil und weist auch unter Einwirkung von sehr hohen Temperaturen über sehr lange Zeiträume eine hohe mechanische Festigkeit und eine hohe Kriechbeständigkeit auf. Diese Wirkung ergibt sich durch einen radialen Gefügegradienten in der Verstärkungsfaser. Im Fall i) ist der radiale Gefügegradient durch das amorphe Material des Faserkerns und die keramischen Körner des Fasermantels etabliert. In Fall ii) ist der radiale Gefügegradient durch die keramischen Körner des Faserkerns und das amorphe Material des Fasermantels etabliert. In Fall iii) ist der radiale Gefügegradient durch die keramischen Körner des Faserkerns und Fasermantels, deren Durchmesser im Faserkern größer ist als im Fasermantel, etabliert.

Bei dem amorphen Material kann es sich um SiBNC handeln. Das keramische Material der Körner kann ausgewählt sein aus der Gruppe bestehend aus $Al_2O_3$, Mullit, YAG, YAG-$Al_2O_3$, ZTA, $ZrO_2$, SiC und Kombinationen hiervon.

Der Faserkern kann, in einer Richtung senkrecht zur Längsachse der Verstärkungsfaser, einen Durchmesser aufweisen, der mindestens so groß ist wie ein n-facher maximaler Durchmesser der Körner des Faserkerns, wobei n > 1 ist und bevorzugt n = 4 ist.

Ferner kann der Faserkern einen Durchmesser aufweisen, der 40 % bis 80 % des Durchmessers der Verstärkungsfaser in einer Richtung senkrecht zur Längsachse der Verstärkungsfaser entspricht.

Der Fasermantel kann, in einer Richtung senkrecht zur Längsachse der Verstärkungsfaser, eine Dicke aufweisen, die mindestens so groß ist wie ein n-facher maximaler Durchmesser der Körner des Faserkerns, wobei n > 1 ist und bevorzugt 1,5, besonders bevorzugt 2, ganz besonders bevorzugt 3, insbesondere 4, beträgt.

Ferner kann der Fasermantel, in einer Richtung senkrecht zur Längsachse der Verstärkungsfaser, eine Dicke aufweisen, die mindestens so groß ist wie ein n-facher maximaler Durchmesser der Körner des Fasermantels, wobei n > 1 ist und bevorzugt 2, besonders bevorzugt 4, ganz besonders bevorzugt 6, insbesondere 8, beträgt. Je größer n, desto besser kann sichergestellt werden, dass die Außenoberfläche des Fasermantels mehrere Lagen der Körner aufweist und damit möglichst glatt ist. Bei einer Belastung entstehen somit keine Kerbspannungen, wodurch sich die Zugfestigkeit der Verstärkungsfaser erhöht.

Die Dicke ($d_m$) des Fasermantels kann im Bereich von 1 μm bis 3 μm liegen und die Körner im Faserkern der Fasern können bei einem Faserdurchmesser (D) von ca. 10 μm einen Durchmesser von ca. 1 bis 3 μm aufweisen, wobei der Durchmesser der Körner im Faserkern größer ist als der Durchmesser der Körner im Fasermantel. Es können sich dadurch Verbesserungen in der Kriechfestigkeit um einen Faktor 5 bis 20 beim Kriechen nach dem Nabarro-Herring-Mechanismus und von 8 bis 100 beim Kriechen nach dem Coble-Mechanismus ergeben. Bei einem größeren Faserdurchmesser (z.B. bei Verstärkungsfasern für MMC) sind auch Partikel mit größeren Durchmessern im Faserkern und größere Dicken des Fasermantels möglich, so dass noch stärkere Verbesserungen erzielt werden können.

Darüber hinaus kann der Fasermantel, in einer Richtung senkrecht zur Längsachse der Verstärkungsfaser, eine Dicke aufweisen, die 10% bis 30 % des Durchmessers der Verstärkungsfaser in einer Richtung senkrecht zur Längsachse der Verstärkungsfaser entspricht.

Das Material des Faserkerns kann isotrope elastische Eigenschaften aufweisen. Dadurch können externe Spannungen an der Verstärkungsfaser nicht zu einer Spannungskonzentration im Bereich des Faserkerns führen. Enthält der Faserkern Körner, so weisen diese optional ein kubisches Kristallgitter auf, bevorzugt ein β-SiC-Kristallgitter oder α-$Al_2O_3$-Kristallgitter. Vorteil ist, dass bei diesen Kristallgittern ein isotropes elastisches Verhalten erreicht wird.

Ferner kann das Material des Fasermantels isotrope elastische Eigenschaften aufweisen. Dadurch können externe Spannungen an der Verstärkungsfaser nicht zu einer Spannungskonzentration im Bereich des Fasermantels führen. Enthält der Fasermantel Körner, so weisen diese optional ein kubisches Kristallgitter auf, bevorzugt ein β-SiC-Kristallgitter oder α-$Al_2O_3$-Kristallgitter. Vorteil ist, dass bei diesen Kristallgittern ein isotropes elastisches Verhalten erreicht wird.

Der maximale Durchmesser der Körner des Faserkerns kann in einer Richtung senkrecht weg von der Längsachse der Verstärkungsfaser abnehmen, bevorzugt in einem zumindest bereichsweisen sigmoidalen Verlauf von der Längsachse der Verstärkungsfaser bis zu den am weitesten von der Längsachse entfernten Bereichen der Verstärkungsfaser. Die Verbesserung der Kriechfestigkeit ist in diesem Fall zwar schlechter als bei einem (theoretisch möglichen) Stufengradienten, aber besser als bei einem linearen Gradienten.

Ferner kann der maximale Durchmesser der Körner des Fasermantels im Bereich von 1 μm bis 10 μm, bevorzugt im Bereich von 1 μm bis 3 μm, liegen.

Der maximale Durchmesser der Körner des Fasermantels kann in einer Richtung senkrecht hin zu der Längsachse der Verstärkungsfaser zunehmen, bevorzugt in einem zumindest bereichsweisen sigmoidalen Verlauf von den am weitesten von der Längsachse der Verstärkungsfaser entfernten Bereichen der Verstärkungsfaser bis zu der Längsachse der Verstärkungsfaser. Die Verbesserung der Kriechfestigkeit ist in diesem Fall zwar schlechter als bei einem (theoretisch möglichen) Stufengradienten, aber besser als bei einem linearen Gradienten.

Ferner kann der maximale Durchmesser der Körner des Fasermantels ≤ 500 nm, bevorzugt ≤ 400 nm, besonders bevorzugt ≤ 300 nm, ganz besonders bevorzugt ≤ 200 nm, insbesondere ≤ 100 nm, betragen, wobei der Durchmesser der Körner des Fasermantels optional im Bereich von 100 nm bis 300 nm liegt. Insbesondere können im Fasermantel kleine Körner (z.B. Durchmesser < 0.5 $\mu$m) und im Faserkern große Körner (z.B. Durchmesser > 1 $\mu$m) angeordnet sein. Zwischen dem Fasermantel und dem Faserkern kann ein kontinuierlicher Übergang (Gradient) in den Korngrößen existieren. Dieser Gradient kann sich auch über den gesamten Radius der Verstärkungsfaser erstrecken, so dass die Körnergröße kontinuierlich von außen nach innen zunimmt.

In einer bevorzugten Ausgestaltungsform sind die Körner im Faserkern frei von Poren oder weisen eine maximale Porengröße von 0,5 $\mu$m auf (vgl. auch Gleichung 1 oben). Dies hat den Vorteil, dass es bei einer Belastung der Verstärkungsfaser nicht zu einer Spannungskonzentration kommt, wodurch die Zugfestigkeit erhöht ist. Es ist bevorzugt, dass die maximale Porengröße im Faserkern kleiner ist als der Durchmesser der Körner im Faserkern.

Erfindungsgemäß wird ferner ein Verfahren zur Herstellung einer erfindungsgemäßen keramischen Verstärkungsfaser bereitgestellt, umfassend

i) Bereitstellen einer Ausgangsfaser, die ein amorphes Material enthält oder daraus besteht, wobei in einer Richtung senkrecht zur Längsachse der Ausgangsfaser kein Gradient in Bezug auf eine Struktur der Ausgangsfaser besteht;

Kontaktieren eines Mittels mit der Oberfläche der Ausgangsfaser, das dazu geeignet ist, zu bewirken, dass in einer Richtung senkrecht zur Längsachse der Ausgangsfaser ein Gradient in Bezug auf eine Struktur der Ausgangsfaser entsteht, wobei das Mittel dazu geeignet ist, die Ausgangsfaser mit einem Mantel auszustatten, der Körner aus einem keramischen Material enthält oder daraus besteht; und
Wärmebehandlung der Ausgangsfaser; oder

ii) Bereitstellen einer Ausgangsfaser, die Körner aus einem keramischen Material enthält oder daraus besteht, wobei in einer Richtung senkrecht zur Längsachse der Ausgangsfaser kein Gradient in Bezug auf eine Struktur der Ausgangsfaser besteht;

Kontaktieren eines Mittels mit der Oberfläche der Ausgangsfaser, das dazu geeignet ist, zu bewirken, dass in einer Richtung senkrecht zur Längsachse der Ausgangsfaser ein Gradient in Bezug auf eine Struktur der Ausgangsfaser entsteht, wobei das Mittel dazu geeignet ist, die Ausgangsfaser mit einem Mantel auszustatten, der ein amorphes Material enthält oder daraus besteht; und
Wärmebehandlung der Ausgangsfaser; oder

iii) Bereitstellen einer Ausgangsfaser, die Körner aus einem keramischen Material enthält oder daraus besteht, wobei in einer Richtung senkrecht zur Längsachse der Ausgangsfaser kein Gradient in Bezug auf eine Struktur der Ausgangsfaser besteht;

Kontaktieren eines Mittels mit der Oberfläche der Ausgangsfaser, das dazu geeignet ist, zu bewirken, dass in einer Richtung senkrecht zur Längsachse der Ausgangsfaser ein Gradient in Bezug auf eine Struktur der Ausgangsfaser entsteht, wobei das Mittel dazu geeignet ist, die Ausgangsfaser mit einem Mantel auszustatten, der Körnern aus einem keramischen Material enthält oder daraus besteht, deren maximaler Durchmesser in einer Richtung senkrecht zur Längsachse der Ausgangsfaser vom Mantel zu einem Kern der Ausgangsfaser abnimmt; und
Wärmebehandlung der Ausgangsfaser.

Das erfindungsgemäße Verfahren ist auf schnelle und einfache Art und Weise durchführbar und führt zu chemisch stabilen Verstärkungsfasern, die auch unter Einwirkung von sehr hohen Temperaturen über sehr lange Zeiträume eine hohe mechanische Festigkeit und eine hohe Kriechbeständigkeit aufweisen. Diese Wirkung ergibt sich durch einen radialen Gefügegradienten in der keramischen Verstärkungsfaser, der über das erfindungsgemäße Verfahren in einer Ausgangsfaser erzeugt wird. Im Fall i) wird der radiale Gefügegradient durch das amorphe Material des Faserkerns und die keramischen Körner des Fasermantels etabliert. In Fall ii) wird der radiale Gefügegradient durch die keramischen Körner des Faserkerns und das amorphe Material des Fasermantels etabliert. In Fall iii) wird der radiale Gefügegradient durch die keramischen Körner des Faserkerns und Fasermantels, deren Durchmesser im Faserkern größer ist als im Fasermantel, etabliert.

Bei der bereitgestellten Ausgangsfaser kann es sich um eine Polymerfaser (Faser im Grünzustand) oder um eine kalzinierte Faser handeln.

Das eingesetzte Mittel kann über ein Verfahren mit der Oberfläche der Ausgangsfaser kontaktiert werden, das ausgewählt ist aus der Gruppe bestehend aus nasschemischen Beschichtungsverfahren, Gasphasenreaktionsverfahren, Spinnen mit einer koaxialen Bikomponenten-Spinndüse und Kombinationen hiervon. Nasschemische Beschichtungsverfahren und/oder Gasphasenreaktionsverfahren sind besonders kostengünstig.

In Verfahrensvariante i) kann das Mittel Körner eines keramischen Materials oder Vorstufen von Körnern eines keramischen Materials enthalten oder daraus bestehen. Das Mittel enthält bevorzugt kristalline Körner oder besteht daraus, die ausgewählt sind aus der Gruppe bestehend aus $Al_2O_3$, Mullit, YAG, YAG-$Al_2O_3$, ZTA, $ZrO_2$, SiC und Kombinationen und Vorstufen hiervon.

In der Verfahrensvariante ii) kann das Mittel ein amorphes Material enthalten oder daraus bestehen, wobei das Mittel bevorzugt SiBNC und/oder SiC enthält oder daraus besteht.

In der Verfahrensvariante iii) ist es vorteilhaft, mittels nasschemischer Beschichtung und/oder Gasphasenreaktionsverfahren der Ausgangsfaser mindestens ein Additiv, das das Kornwachstum beeinflusst, zuzuführen oder mindestens ein in der Ausgangsfaser enthaltenes Additiv, das das Kornwachstum beeinflusst, zu entfernen, um einen radialen Korngrößengradienten in der Ausgangsfaser zu etablieren. Die Etablierung des Korngrößengradienten wird dabei über Diffusionsprozesse in radialer Richtung innerhalb der Ausgangsfaser unterstützt, was zu sigmoidalen Konzentrationsprofilen in Bezug auf die einzelnen Korngrößen führen kann. Die Form des Konzentrationsprofils kann dabei von der Temperatur und Zeitdauer abhängen, die für den Diffusionsprozess zur Verfügung gestellt wird. Die Diffusionsgeschwindigkeit ist auch von der Struktur der Faser abhängig: Grünzustand, amorpher pyrolysierter Zustand, offenporiger kristalliner Zustand, dichter kristalliner Zustand oder ein Zwischenzustand. Die Konzentration der Additive kann wiederum das lokale Kornwachstum bestimmen.

In der Verfahrensvariante iii) kann das Mittel einen Kornwachstumsinhibitor enthalten oder daraus bestehen. Der Kornwachstumsinhibitor ist bevorzugt ausgewählt aus der Gruppe bestehend aus CeO, $ZrO_2$, $Y_2O_3$, MgO und Kombinationen hiervon. Der Kornwachstumsinhibitor kann vor, während oder nach dem Wärmebehandlungsschritt an der Außenoberfläche der Ausgangsfaser auf nasschemischem Weg oder durch eine Gasphase eingebracht werden. Der Kornwachstumsinhibitor wird bevorzugt über ein nasschemisches Beschichtungsverfahren mit der Oberfläche der Ausgangsfaserkontaktiert, besonders bevorzugt über ein nasschemisches Sol-Gel-Verfahren, bei dem die Ausgangsfaser mit einem Aerosol des Kornwachstumsinhibitors besprüht wird und/oder durch ein Tauchbad gezogen wird, welches den Kornwachstumsinhibitor enthält. Die höhere Konzentration der Kornwachstumsinhibitoren im Fasermantel der Ausgangsfaser im Vergleich zum Faserkern kann das Kornwachstum im Fasermantel stärker unterdrücken als im Faserkern und so den radialen Korngrößengradienten etablieren.

In der Verfahrensvariante iii) kann die bereitgestellte Ausgangsfaser (Ausgangsfaser, Edukt) ein Sinteradditiv, insbesondere Al, C oder B, enthalten und das eingesetzte Mittel kann einen Sinteradditiventferner enthalten oder daraus bestehen. Der Sinteradditiventferner ist bevorzugt ausgewählt aus der Gruppe bestehend aus $H_2/H_2O$, $O_2/H_2O$ und Kombinationen hiervon. Der Sinteradditiventferner kann über ein Gasphasenreaktionsverfahren mit der Oberfläche der Ausgangsfaser kontaktiert werden. Aufgrund der Entfernung des Sinteradditivs aus dem Fasermantel der Ausgangsfaser durch den Sinteradditiventferner weist das Sinteradditiv im Fasermantel eine niedrigere Konzentration auf als im Faserkern, wodurch das Kornwachstum im Fasermantel stärker unterdrückt werden kann als im Faserkern und der radiale Korngrößengradient etabliert werden kann.

In der Verfahrensvariante iii) kann das eingesetzte Mittel kristalline Keimbildner enthalten. Die kristallinen Keimbildner weisen bevorzugt eine Größe von maximal 100 nm auf, wobei der maximale Durchmesser einem über Elektronenmikroskopie bestimmten Durchmesser entspricht. Die kristallinen Keimbildner können beim Spinnen mit einer koaxialen Bikomponenten-Spinndüse mit der Oberfläche der Ausgangsfaser in Kontakt gebracht werden, indem die Ausgangsfaser aus einem Innenkanal der koaxialen Spinndüse austritt und der kristalline Keimbildner gleichzeitig aus einem den Innenkanal umschließenden Außenkanal der koaxialen Spinndüse austritt. Die koaxiale Bikomponenten-Spinndüse erlaubt es, einen radialen Konzentrationsgradienten direkt bei der Grünfaserherstellung einzubringen. Dies setzt allerdings voraus, dass die gradierten Körner bei der späteren thermischen Prozessierung nicht diffundieren. Deshalb bietet sich die Grünfasergradierung besonders für die Dotierung der Fasern mit sehr kleinen Keimbildnerkristallen (Seeds) an. Diese Keimbildnerkristalle behalten ihre Position bei der thermischen Prozessierung bei.

Die Temperaturbehandlung in dem erfindungsgemäßen Verfahren kann eine Pyrolyse und/oder eine Sinterung umfassen oder daraus bestehen. Handelt es sich bei der bereitgestellten Ausgangsfaser (Ausgangsfaser, Edukt) um eine Grünfaser, umfasst die Wärmebehandlung in Schritt c) eine Pyrolyse und eine Sinterung. Die Pyrolyse wird bevorzugt bei einer Temperatur im Bereich von 300 bis 900 °C durchgeführt. Handelt es sich bei der in Schritt a) bereitgestellten Ausgangsfaser um eine pyrolysierte Faser, umfasst die Wärmebehandlung eine Sinterung (und keine Pyrolyse). Die Sinterung wird bevorzugt bei einer Temperatur im Bereich von 500 bis 2000 °C durchgeführt.

Nach derTemperaturbehandlung kann das erfindungsgemäße Verfahren einen weiteren Schritt umfassen, nämlich ein Entfernen von in der Ausgangsfaser verbleibendem (d.h. restlichem) Sinteradditiv, bevorzugt über eine Auslagerung der Ausgangsfaser in einer Atmosphäre, die mit dem verbleibenden Sinteradditiv ein gasförmiges Reaktionsprodukt bildet. Die Atmosphäre enthält besonders bevorzugt ein Gasgemisch, das ausgewählt ist aus der Gruppe bestehend aus $H_2/H_2O$, $O_2/H_2O$ und Kombinationen hiervon. Diese Maßnahme kann die Kriecheigenschaften der aus der Ausgangsfaser hervorgehenden Verstärkungsfaser verbessern. Realisiert werden kann dieser zusätzliche Schritt durch eine Auslagerung der Fasern in einer Ofenatmosphäre, die mit den in der Ausgangsfaser vorhandenen Sinteradditiven gasförmige Reaktionsprodukte bildet. Bei entsprechend hohen Temperaturen und/oder entsprechend langen Auslagerungszeiten können Sinteradditive über den gesamten Querschnitt der Ausgangsfaser eliminiert werden.

In einer bevorzugten Ausführungsform werden in den Fasermantel ortsselektiv Druckspannungen eingebracht. Das Einbringen von Druckspannungen erleichtert die Anwendung der aus der Ausgangsfaser hervorgehenden Verstärkungsfaser in textilen Preformen, weil bei der dazu nötigen Biegung der Verstärkungsfaser, die an der Krümmungsaußenseite der Verstärkungsfaser auftretenden Zugspannungen kompensiert werden und somit kleinere Krümmungsradien ermöglicht werden.

Die erfindungsgemäße keramische Verstärkungsfaser kann über das erfindungsgemäße Verfahren hergestellt sein. In diesem Fall weist die erfindungsgemäße Verstärkungsfaser Merkmale auf, die sich zwangsweise aus der Durchführung des erfindungsgemäßen Verfahrens ergeben.

Erfindungsgemäß wird zudem ein Verbundwerkstoff bereitgestellt, der mindestens eine Keramik und/oder mindestens ein Metall enthält, in das mindestens eine erfindungsgemäße keramische Verstärkungsfaser eingebettet ist. Bevorzugt ist der Verbundwerkstoff in einer Vorrichtung enthalten oder besteht aus einer Vorrichtung, die ausgewählt ist aus der Gruppe bestehend aus Chargenträger, Turbinenschaufel, Turbine, Turbinengehäuse, Ofenanlagenbaurohr, Chemieanlagenbaurohr, Heißgasklappe und Kombinationen hiervon. CMC mit den erfindungsgemäßen keramischen Verstärkungsfasern können bei höheren Einsatztemperaturen genutzt werden. Im Falle eines Einsatzes in Gasturbinen kann deren Wirkungsgrad deutlich gesteigert werden.

Anhand der nachfolgenden Figuren und Beispiele soll der erfindungsgemäße Gegenstand näher erläutert werden, ohne diesen auf die hier dargestellten, spezifischen Ausgestaltungsformen einschränken zu wollen.

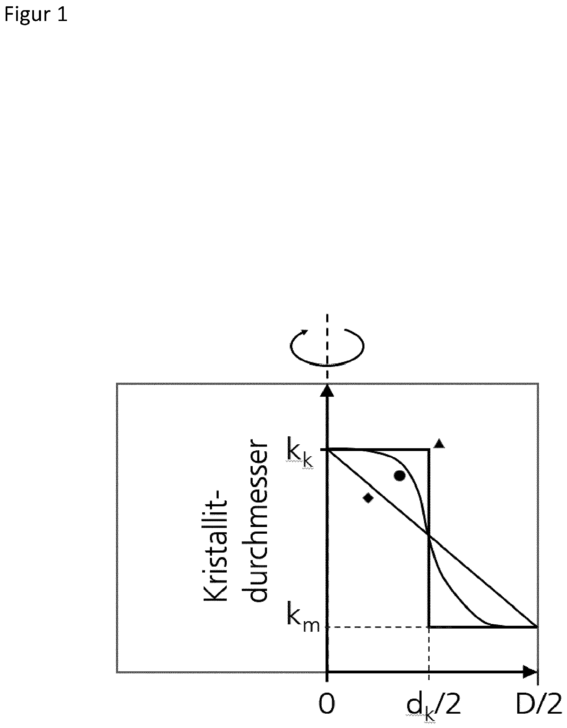

Figur 1 zeigt radiale Verteilungen der Durchmesser der Körner über den Querschnitt einer keramischen Verstärkungsfaser: Stufengradient (▲), linearer Gradient (♦) und sigmoidaler Gradient bzw. sigmoidale Verteilung (●). Bei den Körnern handelt es sich um kristalline Körner (Kristallite).

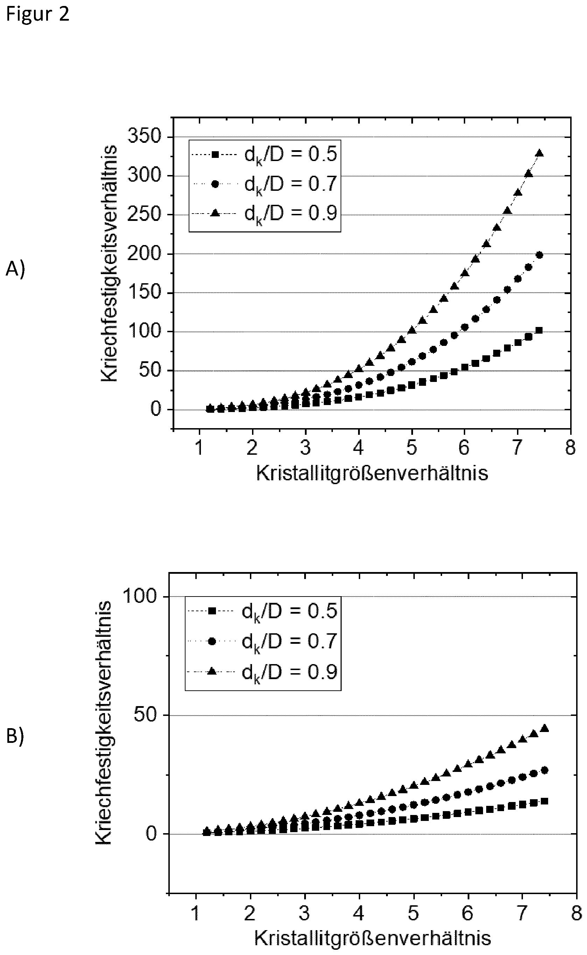

Figur 2 zeigt das Kriechfestigkeitsverhältnis R als Funktion des Korngrößenverhältnisses $k_k/k_m$ für keramische Verstärkungsfasern bei unterschiedlichem Verhältnis von Kerndurchmesser $d_k$ zu Faserdurchmesser D. Figur 2A zeigt den Coble-Mechanismus mit n = 3 und Figur 2B zeigt den Nabarro-Herring-Mechanismus mit n = 2. Bei den Körnern handelt es sich um kristalline Körner (Kristallite).

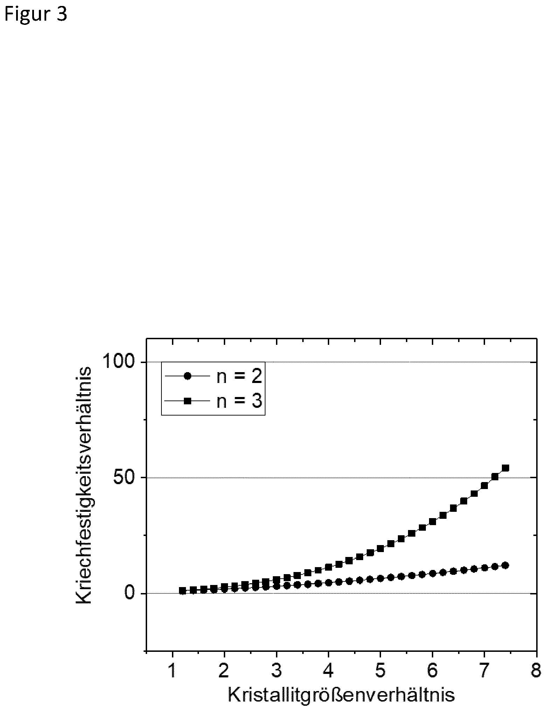

Figur 3 zeigt das Kriechfestigkeitsverhältnis R als Funktion des Korngrößenverhältnisses $k_k/k_m$ für Fasern mit einer linearen Zunahme des Partikeldurchmessers von außen nach innen (siehe lineare Gerade in Figur 1) für den Nabarro-Herring-Mechanismus (siehe: n = 2) und den Coble-Mechanismus (siehe: n = 3). Bei den Körnern handelt es sich um kristalline Körner (Kristallite).

**Beispiel 1 - Erzeugung einer hohen Kriechbeständigkeit**

Es wird zunächst angenommen, dass in den erfindungsgemäßen keramischen Verstärkungsfasern ein scharfer Übergang zwischen dem Faserkern und dem Fasermantel existiert (vgl. Figur 1).

Der Fasermantel hat eine Dicke $d_m$ und der Faserkern hat einen Durchmesser $d_k$. Der Durchmesser D der kompletten Faser (Faserdurchmesser) beträgt also $D = 2d_m + d_k$. Die Durchmesser der Körner (Kristallite) im Fasermantel seien $k_m$ und die Durchmesser der Körner (Kristallite) im Faserkern seien $k_k$. Dann kann unter der - aufgrund der geringen Faserdurchmesser gerechtfertigten - Annahme einer über den Faserquerschnitt gleichförmigen Kriechdehnung die Kriechdehnung der keramischen Verstärkungsfasern exakt berechnet werden. Dabei wird das Verhältnis R der Kriechfestigkeit einer Faser mit Kern-Mantelstruktur zur Kriechfestigkeit einer Faser, die komplett aus den feinkörnigen Körnern (Kristallen) des Mantels aufgebaut ist, betrachtet:

$$(3) \quad R = \left(\frac{d_k}{D}\right)^2 \cdot \left(\frac{k_k}{k_m}\right)^n + 1 - \left(\frac{d_k}{D}\right)^2$$

Der Exponent n in Gleichung 3 beträgt 2 oder 3 - je nachdem ob ein Kriechmechanismus nach Nabarro-Henning oder Coble vorliegt (vgl. Gleichung 1).

Figur 2 zeigt die dramatische Verbesserung in der Kriechfestigkeit, die sich ergibt, wenn ein grobkörniger Faserkern und ein feinkörniger Fasermantel mit einem scharfen Übergang verwendet werden.

Mittels Integration über den Faserradius kann analog auch die Kriechfestigkeit bei einem glatten Übergang zwischen Faserkern und Fasermantel berechnet werden.

Figur 3 zeigt die Ergebnisse für eine lineare Abnahme des Durchmessers der Körner mit dem Abstand von der Längsachse der Fasern von einem Wert $k_k$ in der Mitte der Fasern (d.h. auf der Längsachse der Fasern) bis zu einem Wert $k_m$ an der Außenoberfläche der Fasern (d.h. an der längsten radialen Ausdehnung der Fasern):

$$(4) \quad R = \int_0^1 2x \left[ \frac{k_k}{k_m} + x \left( 1 - \frac{k_k}{k_m} \right) \right]^n d$$

Bei dem erfindungsgemäßen Verfahren zur Herstellung der keramischen Verstärkungsfasern sind weder lineare noch gestufte Größenverteilungsprofile der Körner senkrecht entlang der Längsachse (d.h. in radialer Richtung) zu erwarten, sondern vielmehr die in Figur 1 dargestellten, sigmoidalen Größenverteilungsprofile.

Die Verbesserung der Kriechfestigkeit im Falle des erfindungsgemäßen Verfahrens (mittelscharfer Übergang, sigmoidaler Gradient) liegt dabei zwischen den beiden in Figur 2 und in Figur 3 gezeigten Extremfällen, ist also schlechter als in Figur 2 (schärfster Übergang, Stufengradient), aber besser als in Figur 3 (glattester Übergang, linearer Gradient).

**Beispiel 2 - Erzeugung eines Gradienten durch Kornwachstumsinhibitoren**

Für oxidische Verstärkungsfasern aus $Al_2O_3$ oder Mullit wirken CeO, $ZrO_2$ $Y_2O_3$ oder MgO als Kornwachstumsinhibitoren während dem Sintern.

Beschichtungen aus Sol-Gel-Vorstufen dieser Oxide können z.B. in einem kontinuierlichen Rolle-zu-Rolle-Verfahren, bei dem die Faserbündel durch Tauchbäder gezogen werden, auf pyrolysierte $Al_2O_3$-Fasern oder Mullitfasern in einer Schichtdicke von ca. 100 nm aufgebracht werden. Alternativ können die Fasern auch mit einem Aerosol aus den Sol-Gel-Vorstufen besprüht werden.

Beim anschließenden kontinuierlichen Sintern der beschichteten Fasern diffundieren die Kornwachstumsinhibitoren in die Fasern ein und führen aufgrund des gezielt eingestellten Konzentrationsgradienten zu einem Gradienten im Kornwachstum der $Al_2O_3$-Körner bzw. Mullitkörner, wobei im Faserkern grö-ßere Körner entstehen als im Fasermantel.

**Beispiel 3 - Erzeugung eines Gradienten durch Entfernung von Sinteradditiv**

Enthält die Ausgangsfaservor dem Sinterschritt ein Sinteradditiv, so kann das Sinteradditiv, z.B. durch eine Gasphasenreaktion, selektiv aus dem Mantelbereich der Faser entfernt werden:

$$(5) \quad A_{solid} + M_{gas} \leftrightarrow AM_{gas}$$

mit dem Sinteradditiv $A_{solid}$, dem gasförmigen Edukt $M_{gas}$ und dem gasförmigen Reaktionsprodukt $AM_{gas}$ (wobei noch weitere gasförmige Reaktionsprodukte gebildet werden können).

Da die gasförmigen Reaktionsprodukte flüchtig sind, findet die Reaktion an der Faseroberfläche auch statt, wenn das Gleichgewicht auf der Seite der Edukte liegt. Über den Faserquerschnitt entsteht ein Konzentrationsunterschied des Sinteradditivs, der durch einen nach außen gerichteten Diffusionsstrom ausgeglichen wird. Dadurch kann das Sinteradditiv in einem größeren Bereich des Fasermantels entfernt werden, so dass dort der Verdichtungsprozess langsamer einsetzt als im Faserkern. Dies hat dann auch ein verspätetes Kornwachstum zur Folge, da lokale Poren das Kornwachstum hemmen. Folglich entstehen bei der Sinterung der Verstärkungsfaser im Fasermantel kleinere Körner (z.B. Kristallite) als im Faserkern.

Ein ähnliches Ergebnis wird erzielt, wenn die Gasphasenreaktion in einem Stadium der Faserherstellung - z.B. mit offenen Porenkanälen - stattfindet, in dem die Gasmoleküle $M_{gas}$ in die Faser eindringen und die gasförmigen Reaktionsprodukte $AM_{gas}$ nach außen abtransportiert werden können. Das Konzentrationsprofil des Sinteradditivs über den Faserquerschnitt wird dann durch die Gasdiffusion bestimmt.

Für nichtoxidische Verstärkungsfasern aus SiC kann ein Sinteradditiv - Beispiel Bor - direkt in die Spinnmasse eingebracht werden, das dann in der Grünfaser gleichmäßig verteilt vorliegt. Während der Wärmebehandlung kann Bor durch eine Gasphasenreaktion - z.B. durch geringe Mengen an $H_2/H_2O$ in der Ofenatmosphäre - als gasförmige Borsäure aus dem Mantelbereich der Fasern entfernt werden. Während der Sinterung erfolgt dann im Faserkern - aufgrund der dort höheren Konzentration an Bor verglichen mit dem Fasermantel - eine schnellere Verdichtung und ein schnelleres Kornwachstum als im Fasermantel.

**Beispiel 4** - **Erzeugung eines Gradienten durch kristallinen Keimbildner**

Als kristallinen Keimbildner können z. B. Mullit, Korund oder Haematit eingesetzt werden, um das Kornwachstum während dem Sintern zu steuern.

**Patentansprüche**

1.   Keramische Verstärkungsfaser, aufweisend

a) einen Faserkern, der sich entlang einer Längsachse der Verstärkungsfaser erstreckt und, in einer Richtung senkrecht zur Längsachse der Verstärkungsfaser, einen Durchmesser von mindestens 2 $\mu$m aufweist;
b) einen Fasermantel, der sich entlang der Längsachse der Verstärkungsfaser auf dem Faserkern erstreckt und, in einer Richtung senkrecht zur Längsachse der Verstärkungsfaser, eine Dicke von mindestens 1 $\mu$m aufweist; und
c) Körner aus einem keramischen Material;

**dadurch gekennzeichnet, dass**

i) der Faserkern ein amorphes Material enthält oder daraus besteht und der Fasermantel die Körner aus einem keramischen Material enthält oder daraus besteht; oder
ii) der Faserkern die Körner aus einem keramischen Material enthält oder daraus besteht und der Fasermantel ein amorphes Material enthält oder daraus besteht; oder
iii) der Faserkern und der Fasermantel die Körner aus einem keramischen Material enthalten oder daraus bestehen, wobei ein maximaler Durchmesser der Körner des Fasermantels kleiner ist als ein maximaler Durchmesser der Körner des Faserkerns, wobei der maximale Durchmesser jeweils einem über Elektronenmikroskopie bestimmten Durchmesser entspricht.

2.   Verstärkungsfaser gemäß dem vorhergehenden Anspruch, **dadurch gekennzeichnet, dass** der Faserkern, in einer Richtung senkrecht zur Längsachse der Verstärkungsfaser, einen Durchmesser aufweist, der

i) mindestens so groß ist wie ein n-facher maximaler Durchmesser der Körner des Faserkerns, wobei n > 1 ist und bevorzugt n = 4 ist, und/oder
ii) 40% bis 80% des Durchmessers der Verstärkungsfaser in einer Richtung senkrecht zur Längsachse der Verstärkungsfaser entspricht.

3.   Verstärkungsfaser gemäß einem der vorhergehenden Ansprüche, **dadurch gekennzeichnet, dass** der Fasermantel, in einer Richtung senkrecht zur Längsachse der Verstärkungsfaser, eine Dicke aufweist, die

i) mindestens so groß ist wie ein n-facher maximaler Durchmesser der Körner des Faserkerns, wobei n > 1 ist und bevorzugt 1,5, besonders bevorzugt 2, ganz besonders bevorzugt 3, insbesondere 4, beträgt; und/oder
ii) mindestens so groß ist wie ein n-facher maximaler Durchmesser der Körner des Fasermantels, wobei n > 1 ist und bevorzugt 2, besonders bevorzugt 4, ganz besonders bevorzugt 6, insbesondere 8, beträgt; und/oder
iii) 10% bis 30% des Durchmessers der Verstärkungsfaser in einer Richtung senkrecht zur Längsachse der Verstärkungsfaser entspricht.

4.   Verstärkungsfaser gemäß einem der vorhergehenden Ansprüche, **dadurch gekennzeichnet, dass** das Material des Faserkerns isotrope elastische Eigenschaften aufweist, wobei optional die Körner des Faserkerns ein zumindest annähernd kubisches Kristallgitter aufweisen, bevorzugt ein $\beta$-SiC-Kristallgitter oder $\alpha$-Al$_2$O$_3$-Kristallgitter aufweisen.

5.   Verstärkungsfaser gemäß einem der vorhergehenden Ansprüche, **dadurch gekennzeichnet, dass** das Material des Fasermantels isotrope elastische Eigenschaften aufweist, wobei optional die Körner des Fasermantels ein zumindest annähernd kubisches Kristallgitter aufweisen, bevorzugt ein $\beta$-SiC-Kristallgitter oder $\alpha$-Al$_2$O$_3$-Kristallgitter aufweisen.

6. Verstärkungsfaser gemäß einem der vorhergehenden Ansprüche, **dadurch gekennzeichnet, dass** der maximale Durchmesser der Körner des Faserkerns

    i) in einer Richtung senkrecht weg von der Längsachse der Verstärkungsfaser abnimmt, bevorzugt in einem zumindest bereichsweisen sigmoidalen Verlauf von der Längsachse der Verstärkungsfaser bis zu den am weitesten von der Längsachse entfernten Bereichen der Verstärkungsfaser; und/oder
    ii) im Bereich von 1 $\mu$m bis 10 $\mu$m, bevorzugt im Bereich von 1 $\mu$m bis 3 $\mu$m, liegt.

7. Verstärkungsfaser gemäß einem der vorhergehenden Ansprüche, **dadurch gekennzeichnet, dass** der maximale Durchmesser der Körner des Fasermantels

    i) in einer Richtung senkrecht hin zu der Längsachse der Verstärkungsfaser zunimmt, bevorzugt in einem zumindest bereichsweisen sigmoidalen Verlauf von den am weitesten von der Längsachse der Verstärkungsfaser entfernten Bereichen der Verstärkungsfaser bis zu der Längsachse der Verstärkungsfaser; und/oder
    ii) $\leq$ 500 nm, bevorzugt $\leq$ 400 nm, besonders bevorzugt $\leq$ 300 nm, ganz besonders bevorzugt $\leq$ 200 nm, insbesondere $\leq$ 100 nm, beträgt, wobei der Durchmesser der Körner des Fasermantels optional im Bereich von 100 nm bis 300 nm liegt.

8. Verfahren zur Herstellung einer keramischen Verstärkungsfaser gemäß einem der vorhergehenden Ansprüche, umfassend

    i) Bereitstellen einer Ausgangsfaser, die ein amorphes Material enthält oder daraus besteht, wobei in einer Richtung senkrecht zur Längsachse der Ausgangsfaser kein Gradient in Bezug auf eine Struktur der Ausgangsfaser besteht;

    Kontaktieren eines Mittels mit der Oberfläche der Ausgangsfaser, das dazu geeignet ist, zu bewirken, dass in einer Richtung senkrecht zur Längsachse der Ausgangsfaser ein Gradient in Bezug auf eine Struktur der Ausgangsfaser entsteht, wobei das Mittel dazu geeignet ist, die Ausgangsfaser mit einem Mantel auszustatten, der Körner aus einem keramischen Material enthält oder daraus besteht; und
    Wärmebehandlung der Ausgangsfaser; oder

    ii) Bereitstellen einer Ausgangsfaser, die Körner aus einem keramischen Material enthält oder daraus besteht, wobei in einer Richtung senkrecht zur Längsachse der Ausgangsfaser kein Gradient in Bezug auf eine Struktur der Ausgangsfaser besteht;

    Kontaktieren eines Mittels mit der Oberfläche der Ausgangsfaser, das dazu geeignet ist, zu bewirken, dass in einer Richtung senkrecht zur Längsachse der Ausgangsfaser ein Gradient in Bezug auf eine Struktur der Ausgangsfaser entsteht, wobei das Mittel dazu geeignet ist, die Ausgangsfaser mit einem Mantel auszustatten, der ein amorphes Material enthält oder daraus besteht; und
    Wärmebehandlung der Ausgangsfaser; oder

    iii) Bereitstellen einer Ausgangsfaser, die Körner aus einem keramischen Material enthält oder daraus besteht, wobei in einer Richtung senkrecht zur Längsachse der Ausgangsfaser kein Gradient in Bezug auf eine Struktur der Ausgangsfaser besteht;

    Kontaktieren eines Mittels mit der Oberfläche der Ausgangsfaser, das dazu geeignet ist, zu bewirken, dass in einer Richtung senkrecht zur Längsachse der Ausgangsfaser ein Gradient in Bezug auf eine Struktur der Ausgangsfaser entsteht, wobei das Mittel dazu geeignet ist, die Ausgangsfaser mit einem Mantel auszustatten, der Körnern aus einem keramischen Material enthält oder daraus besteht, deren maximaler Durchmesser in einer Richtung senkrecht zur Längsachse der Ausgangsfaser vom Mantel zu einem Kern der Ausgangsfaser abnimmt; und
    Wärmebehandlung der Ausgangsfaser.

9. Verfahren gemäß Anspruch 8, **dadurch gekennzeichnet, dass** das Mittel über ein Verfahren mit der Oberfläche der Ausgangsfaser kontaktiert wird, das ausgewählt ist aus der Gruppe bestehend aus nasschemischen Beschichtungsverfahren, Gasphasenreaktionsverfahren, Spinnen mit einer koaxialen Bikomponenten-Spinndüse und Kombinationen hiervon.

10. Verfahren gemäß einem der Ansprüche 8 oder 9, **dadurch gekennzeichnet, dass** in Verfahrensvariante i) das Mittel Körner eines keramischen Materials oder Vorstufen von Körnern eines keramischen Materials enthält oder daraus besteht, wobei das Mittel bevorzugt Körner enthält oder daraus besteht, die ausgewählt sind aus der Gruppe bestehend aus $Al_2O_3$, Mullit, YAG, YAG-$Al_2O_3$, ZTA, $ZrO_2$, SiC und Kombinationen und Vorstufen hiervon.

11. Verfahren gemäß einem der Ansprüche 8 bis 10, **dadurch gekennzeichnet, dass** in Verfahrensvariante ii) das Mittel ein amorphes Material enthält oder daraus besteht, wobei das Mittel bevorzugt SiBNC und/oder SiC enthält oder daraus besteht.

12. Verfahren gemäß einem der Ansprüche 8 bis 11, **dadurch gekennzeichnet, dass** in Verfahrensvariante iii) das Mittel einen Kornwachstumsinhibitor enthält oder daraus besteht, wobei der Kornwachstumsinhibitor bevorzugt

   i) ausgewählt ist aus der Gruppe bestehend aus CeO, $ZrO_2$, $Y_2O_3$, MgO und Kombinationen hiervon; und/oder
   ii) über ein nasschemisches Beschichtungsverfahren mit der Oberfläche der Ausgangsfaser kontaktiert wird, besonders bevorzugt über ein nasschemisches Sol-Gel-Verfahren, bei dem die Ausgangsfaser mit einem Aerosol des Kornwachstumsinhibitors besprüht wird und/oder durch ein Tauchbad gezogen wird, welches den Kornwachstumsinhibitor enthält.

13. Verfahren gemäß einem der Ansprüche 8 bis 12, **dadurch gekennzeichnet, dass** in Verfahrensvariante iii) die bereitgestellte Ausgangsfaser ein Sinteradditiv, insbesondere Al, C oder B, enthält, und das eingesetzte Mittel einen Sinteradditiventferner enthält oder daraus besteht, wobei der Sinteradditiventferner bevorzugt

   i) ausgewählt ist aus der Gruppe bestehend aus $H_2/H_2O$, $O_2/H_2O$ und Kombinationen hiervon; und/oder
   ii) über ein Gasphasenreaktionsverfahren mit der Oberfläche der Ausgangsfaser kontaktiert wird.

14. Verfahren gemäß einem der Ansprüche 8 bis 13, **dadurch gekennzeichnet, dass** in Verfahrensvariante iii) das Mittel kristalline Keimbildner enthält, wobei die kristallinen Keimbildner bevorzugt

   i) eine Größe von maximal 100 nm aufweisen, wobei der maximale Durchmesser einem über Elektronenmikroskopie bestimmten Durchmesser entspricht; und/oder
   ii) ausgewählt sind aus der Gruppe bestehend aus Mullit, Korund, Haematit und Kombinationen hiervon; und/oder
   iii) beim Spinnen mit einer koaxialen Bikomponenten-Spinndüse mit der Oberfläche der Ausgangsfaser in Kontakt gebracht werden, indem die Ausgangsfaser aus einem Innenkanal der koaxialen Spinndüse austritt und der kristalline Keimbildner gleichzeitig aus einem den Innenkanal umschließenden Außenkanal der koaxialen Spinndüse austritt.

15. Verbundwerkstoff, enthaltend mindestens eine Keramik und/oder mindestens ein Metall, in das mindestens eine keramische Verstärkungsfaser gemäß einem der Ansprüche 1 bis 7 eingebettet ist, wobei der Verbundwerkstoff bevorzugt in einer Vorrichtung enthalten ist oder diese aus ihm besteht, die ausgewählt ist aus der Gruppe bestehend aus Chargenträger, Turbinenschaufel, Turbine, Turbinengehäuse, Ofenanlagenbaurohr, Chemieanlagenbaurohr, Heißgasklappe und Kombinationen hiervon.

Figur 1

Figur 2

Figur 3

Europäisches
Patentamt

European
Patent Office

Office européen
des brevets

# EUROPÄISCHER RECHERCHENBERICHT

**Nummer der Anmeldung**

**EP 23 16 0813**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 876 659 A (YASUTOMI YOSHIYUKI [JP] ET AL) 2. März 1999 (1999-03-02) * Beispiel 8; Tabelle 4 * ----- | 1-15 | INV. C04B35/626 C04B35/628 C04B35/80 |
| X | US 5 039 550 A (MALGHAN SUBHAS G [US] ET AL) 13. August 1991 (1991-08-13) * Beispiel 1 * ----- | 1-15 | |
| X | US 4 778 722 A (YAMAMURA TAKEMI [JP] ET AL) 18. Oktober 1988 (1988-10-18) * Spalte 4, Zeilen 62-65; Anspruch 1 * ----- | 1-15 | |
| X | ZIMA T M ET AL: "The behavior of the oxide-coated Nicalon(TM) fibers exposed to air at 1000^oC", JOURNAL OF THE EUROPEAN CERAMIC SOCIETY, ELSEVIER, AMSTERDAM, NL, Bd. 25, Nr. 11, 1. Juli 2005 (2005-07-01), Seiten 1943-1952, XP004940224, ISSN: 0955-2219, DOI: 10.1016/J.JEURCERAMSOC.2004.06.011 * Teil 2, 3.2 * ----- | 1-15 | RECHERCHIERTE SACHGEBIETE (IPC) C04B |
| X | DE 698 30 510 T2 (LANXIDE TECHNOLOGY CO LTD [US]; DUPONT LANXIDE COMPOSITES INC [US]) 23. März 2006 (2006-03-23) * Beispiel 1 * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 27. Juli 2023 | Raming, Tomas |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**   EP 23 16 0813

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-07-2023

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 5876659 | A | 02-03-1999 | CN | 1102632 | A | 17-05-1995 |
| | | | US | 5876659 | A | 02-03-1999 |
| US 5039550 | A | 13-08-1991 | KEINE | | | |
| US 4778722 | A | 18-10-1988 | CA | 1302176 | C | 02-06-1992 |
| | | | EP | 0246104 | A1 | 19-11-1987 |
| | | | US | 4778722 | A | 18-10-1988 |
| DE 69830510 | T2 | 23-03-2006 | AU | 741440 | B2 | 29-11-2001 |
| | | | CA | 2307854 | A1 | 06-05-1999 |
| | | | DE | 69830510 | T2 | 23-03-2006 |
| | | | EP | 1028926 | A2 | 23-08-2000 |
| | | | JP | 2001520973 | A | 06-11-2001 |
| | | | US | 6228453 | B1 | 08-05-2001 |
| | | | US | 2002058107 | A1 | 16-05-2002 |
| | | | WO | 9921805 | A2 | 06-05-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SCHAWALLER, D. et al.** *Macromolecular Materials and Engineering,* vol. 297, 502-522
- **LIU, B. ; ZHU, L.** *Ceramics International,* vol. 43, 10743-10749
- **MASATO, K. ; MESSING, G.L.** *Journal of the American Ceramic Society,* vol. 68 (9), 500-505
- **RAJU, K. ; YOON, D.H.** *Ceramics International,* vol. 42 (16), 17947-17962
- **ICHIKAWA, H.** *Annu. Rev. Mater. Res.,* vol. 46, 335-356
- **KUMAGAI, M. ; MESSING, G.L.** *Journal of theamerican CeramicSociety,* vol. 68 (9), 500-505